# EUROPÄISCHE PATENTSCHRIFT

(11) **EP 0 980 617 B1**
(45) Veröffentlichungstag und Bekanntmachung des Hinweises auf die Patenterteilung: **22.06.2005**
(21) Anmeldenummer: 98924256.5
(22) Anmeldetag: 30.04.1998
(51) Int. Cl.: H04L 29/06, H04M 3/42

(54) **VERFAHREN ZUR KOMMUNIKATIONSTEUERUNG IN EINEM NETZ**
METHOD FOR COMMUNICATION CONTROL IN A NETWORK
PROCEDE POUR COMMANDER LA TRANSMISSION DANS UN RESEAU

(30) Priorität: 09.05.1997 EP 97107659
(43) Veröffentlichungstag der Anmeldung: 23.02.2000
(73) Patentinhaber: SIEMENS AKTIENGESELLSCHAFT, 80333 München (DE)
(72) Erfinder: SCHMIDT, Christian, D-86163 Augsburg (DE); KURZAWA, Hendrik, D-81379 München (DE); KROB, Silvia, D-81541 München (DE); LANGE, Thomas, D-84034 Landshut (DE); UNGRUH, Joachim, D-80638 München (DE); LINDENTHAL, Andreas, D-81247 München (DE)
(86) Internationale Anmeldenummer: PCT/EP1998/002567
(87) Internationale Veröffentlichungsnummer: WO 1998/052332

(56) Entgegenhaltungen:
- EP-A- 0 758 175
- WO-A-96/38018
- WO-A-97/14238
- WO-A-97/16007
- WO-A-97/20424
- US-A- 5 608 786
- RABBAGE R ET AL: "INTERNET PHONE- CHANGING THE TELEPHONY PARADIGM?" BT TECHNOLOGY JOURNAL, Bd. 15, Nr. 2, April 1997, Seiten 145-157, XP000676853
- "WORKSTATION COMMUNICATIONS SYSTEM" IBM TECHNICAL DISCLOSURE BULLETIN, Bd. 37, Nr. 9, 1. September 1994, Seiten 101-104, XP000473347

## Beschreibung

Wenn sich ein analoger Fernsprechteilnehmer in einer Internet Sitzung befindet, ist er telefonisch nicht erreichbar. Eine Benachrichtigung über ankommende Rufe zum Beispiel mittels eingespeisten Tönen ist nicht einfach möglich, da zwischen dem Teilnehmer und dem Internet Einwählpunkt (Point of Presence, POP) ein Modemprotokoll bzw. Internet Protokoll (kurz IP) verwendet wird.

Der Erfindung liegt die Aufgabe zugrunde, ein Verfahren anzugeben, durch das die genannten Probleme überwunden werden.

Mit der Erfindung hat der Teilnehmer die Möglichkeit einen Telefon-Dienst simultan zu seiner Internet Sitzung entgegenzunehmen (z.B. mit Sound-Karte und Mikrofon). Der Teilnehmer muß für die Entgegennahme des Telefon-Dienstes seine Internet Sitzung also nicht unterbrechen.

Die Erfindung ist insbesondere für einen Analog-Teilnehmer vorteilhaft, da dieser nur über einen einzigen Nutzkanal verfügt, d.h. keinen zweiten Nutzkanal wie z.B. ein ISDN-Teilnehmer.

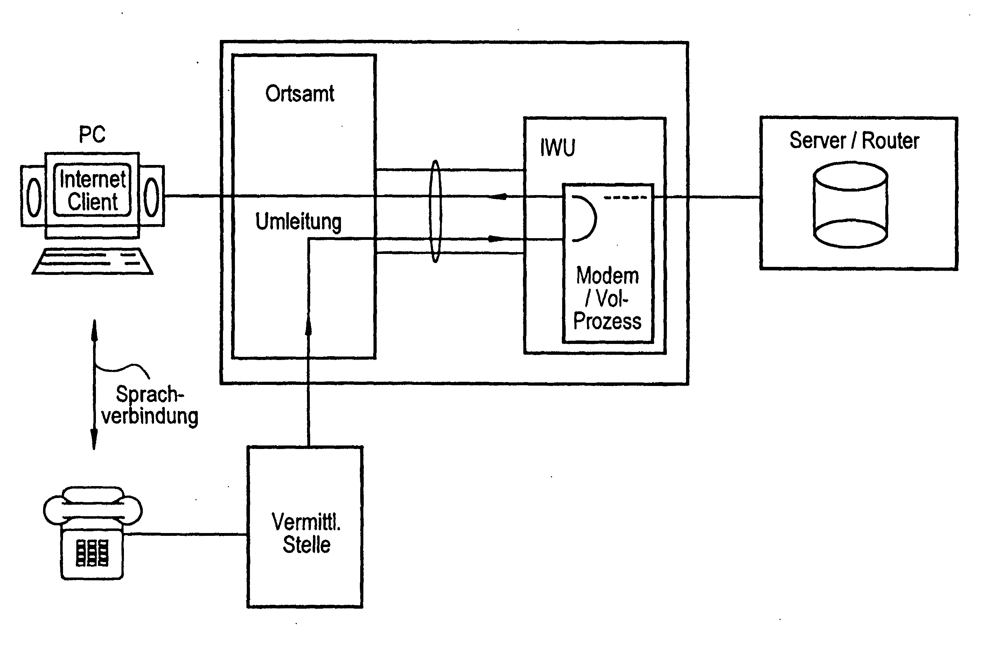

Im folgenden wird ein Ausführungsbeispiel der Erfindung anhand der Zeichnung näher erläutert. Die Zeichnung umfaßt eine Figur.

Die Figur zeigt das Prinzip der Erfindung, nämlich eine Kombination des Leistungsmerkmals 'Anrufumleitung' und der 'Voice over Internet' Technik. Mithilfe dieser Kombination werden Daten aus einem Leitungs-vermittelnden Netz (öffentliches oder privates Telefonnetz) in den IP-Paketstrom einer laufenden Internet Sitzung eingephast. Ebenso werden IP-Sprachdaten aus der Internet Sitzung in das Telefonnetz eingespeist.

Ist ein analoger Teilnehmer in einer Internet Sitzung und kommt für seinen Anschluß ein Telefon-Dienst, z.B. Telefonruf, an, so wird der Ruf dem Teilnehmer über den Internet-Dienst 'Voice over Internet VoI' angeboten, wobei ihm dabei die Rufnummer angezeigt wird. Der Teilnehmer hat dann die Möglichkeit, die Annahme zu verweigern oder den Ruf simultan zu seiner Internet Sitzung entgegenzunehmen (z.B. mit Sound-Karte und Mikrofon). Der Teilnehmer muß für die Entgegennahme des Rufes seine Internet Sitzung also nicht unterbrechen.

Das Leistungsmerkmal (Feature) 'Anrufumleitung in einer Internet Sitzung' kann wie folgt unterteilt werden:
(a) Der Teilnehmer bekommt eine Berechtigung zur Nutzung dieses Features
(b) Die Vermittlungsstelle muß erkennen, wenn ein Teilnehmer sich in einer Internet Sitzung befindet. Zu diesem Zweck wird der Vermittlungsstelle von dem Internet Einwählpunkt beim Aufbau der IP-Verbindung mitgeteilt, daß die der IP-Verbindung zugrunde liegende Nutzkanal-Verbindung für eine IP-Verbindung benutzt wird, wobei in der Mitteilung gleichzeitig die IP-Nummer der IP-Verbindung enthalten ist (Die Vermittlungsstelle merkt sich bei Empfang dieser Mitteilung die E.164.Nummer des Internet Einwählpunkts).
(c) Wird in der Vermittlungsstelle ein telefonischer Verbindungswunsch für diesen Teilnehmer empfangen, so wird der Ruf zu dem Internet Einwählpunkt umgeleitet (der Internet Einwählpunkt wird in diesem Fall auch als 'Voice over Internet Interworking Unit IWU' (siehe Figur) bezeichnet). Die für die IWU erforderlichen Informationen, z.B. IP-Nummer des Internet Teilnehmers, werden beim dem zur Umleitung erforderlichen Ruf-Verbindungsaufbau vom Ortsamt an die Interworking Einheit weitergeleitet.
(d) Die 'Voice over Internet'-Dienst-Applikation der IWU stellt über die IP Verbindung eine weitere Verbindung zu einer entsprechenden Applikation im PC des Internet Teilnehmers her. Dieser hat nun die Möglichkeit, den Ruf abzuweisen, oder simultan zur gegenwärtigen Internet Sitzung mit Hilfe seiner PC Ausrüstung (Sound-Karte und Mikrofon) entgegenzunehmen.

## Patentansprüche

1. Verfahren zur Kommunikationsteuerung in einem Netz, demgemäß
für einen an das Netz angeschlossenen Teilnehmer über dessen Netzzugangsknoten eine Nutzkanal-Verbindung zu einem Internet Einwählpunkt (IWU) aufgebaut wird,
**dadurch gekennzeichnet, daß**
ein während des Bestehens der Nutzkanal-Verbindung über das Netz für den Teilnehmer am Netzzugangsknoten ankommender Dienst, z.B. Ruf, zum Internet Einwählpunkt umgeleitet wird und von diesem dem Teilnehmer über die Nutzkanal-Verbindung angeboten wird.

2. Verfahren nach Anspruch 1,
**dadurch gekennzeichnet, daß**
eine für den Teilnehmer ankommender Dienst bedingungslos an den Internet Einwählpunkt umgeleitet wird.

3. Verfahren nach Anspruch 1,
**dadurch gekennzeichnet, daß**
vor dem Umleiten des ankommenden Dienstes an den Internet Einwählpunkt dem Internet Einwählpunkt über einen Steuerkanal (D-Kanal) das Vorliegen des Dienstes signalisiert wird, woraufhin diese Information von dem Internet Einwählpunkt über den Nutzkanal an den Teilnehmer weitergeleitet wird.

4. Verfahren nach einem der Ansprüche 1 bis 3,
**dadurch gekennzeichnet, daß**
dem Netzknoten vom Internet Einwählpunkt beim Aufbau der IP-Verbindung mitgeteilt wird, daß die Nutzkanal-Verbindung für eine IP-Verbindung benutzt wird, wobei die Mitteilung gleichzeitig die IP-Nummer der IP-Verbindung enthält.

5. Netzknoten eines Netzes, der
einem an ihm angeschlossenen Teilnehmer zwecks Zugang zum Internet eine Nutzkanal-Verbindung zu einem Internet Einwählpunkt des Netzes aufbaut,
**dadurch gekennzeichnet, daß**
der Netzknoten derart ausgestaltet ist, daß or einen während des Bestehens der Nutzkanal-Verbindung über das Telefonnetz bei ihm für den Teilnehmer ankommenden Dienst, z.B. Ruf, zum Internet Einwählpunkt umleitet.

6. Internet Einwählpunkt für ein Netz, der
a) an einen Netzknoten des Netzes angeschlossen ist,
b) über eine Nutzkanal-Verbindung des Netzes eine IP-Verbindung zu einem an das Netz angeschlossenen Teilnehmer unterhält,
**dadurch gekennzeichnet, daß** der Einwählpunkt derart ausgestaltet ist, daß er einen während des Bestehens der Nutzkanal-Verbindung über das Netz am Netzzugangsknoten des Teilnehmers für den Teilnehmer ankommenden Dienst, z.B. Ruf, vom Netzzugangsknoten entgegennimmt, dem Teilnehmer über die Nutzkanal-Verbindung anbietet und gegebenenfalls zustellt.

## Claims

1. Method for controlling communication in a network, according to which,
for a subscriber connected to the network, a user channel connection to an Internet Interworking Unit (IWU) is set up via their network access node,
**characterized in that**
a service, e.g. a call, arriving for the subscriber at the network access node while the user channel connection is in place is diverted to the Internet Interworking Unit and is offered to the subscriber by this unit over the user channel connection.

2. Method according to Claim 1,
**characterized in that**
an incoming service for the subscriber is unconditionally diverted to the Internet Interworking Unit.

3. Method according to Claim 1,
**characterized in that**
before the incoming service is diverted to the Internet Interworking Unit, the presence of the service is signalled via a control channel to the Interworking Unit, at which point this information is forwarded via the Internet Interworking Unit over the user channel to the subscriber.

4. Method in accordance with one of the Claims 1 to 3, **characterized in that**
the network node is notified by the Internet Interworking Unit on connection setup that the user channel connection will be used for an IP connection, with the notification simultaneously containing the IP number of the connection.

5. Network node of a network, which,
for a subscriber connected to it, sets up for the purpose of access to the Internet a user channel connection to an Internet Interworking Unit of the network,
**characterized in that**
the network node is embodied such that, while the user channel connection is in place, it diverts to the Internet Interworking Unit a service arriving at it over the telephone network for the subscriber, e.g. a call.

6. Internet Interworking Unit for a network, which
a) is connected to a network node of the network,
b) maintains over a user channel connection of the network an IP connection to a subscriber connected to the network,
**characterized in that**
the Internet Interworking unit is embodied such that, while the user channel connection is in place, it accepts from the network access node an incoming service, e.g. a call arriving for the subscriber over the network at the network access node of the subscriber, offers it to the subscriber over the user channel connection and where necessary submits it.

## Revendications

1. Procédé pour commander la communication dans un réseau, selon lequel
une connexion par canal utile à un point de commutation à Internet (IWU) est établie pour un abonné raccordé au réseau, par l'intermédiaire du noeud d'accès au réseau de cet abonné,
**caractérisé en ce qu'**
un service, p. ex. un appel, arrivant pour l'abonné au noeud d'accès au réseau pendant l'existence de la connexion par canal utile, par l'intermédiaire du réseau, est renvoyé au point de commutation à Internet et est proposé à l'abonné par celui-ci par l'intermédiaire de la connexion par canal utile.

2. Procédé selon la revendication 1,
**caractérisé en ce qu'**
un service arrivant pour l'abonné est renvoyé sans conditions au point de commutation à Internet.

3. Procédé selon la revendication 1,
**caractérisé en ce que**
la présence du service est signalée au point de commutation à Internet avant le renvoi du service arrivant au point de commutation à Internet, par l'intermédiaire d'un canal pilote (canal D), sur quoi cette information est transmise à l'abonné par le point de commutation à Internet par l'intermédiaire du canal utile.

4. Procédé selon l'une quelconque des revendications 1 à 3,
**caractérisé en ce qu'**il
est communiqué au noeud de réseau par le point de commutation à Internet, lors de l'établissement de la connexion IP, que la connexion par canal utile est utilisée pour une connexion IP, l'information communiquée contenant en même temps le numéro IP de la connexion IP.

5. Noeud de réseau d'un réseau, qui
établit une connexion par canal utile vers un point de commutation à Internet pour un abonné raccordé à lui, dans le but de l'accès à Internet,
**caractérisé en ce que**
le noeud de réseau est conçu de telle manière qu'il renvoie au point de commutation à Internet un service, p. ex. un appel, arrivant auprès de lui pour l'abonné pendant l'existence de la connexion par canal utile par l'intermédiaire du réseau téléphonique.

6. Point de commutation à Internet pour un réseau, qui
a) est connecté à un noeud de réseau du réseau,
b) maintient une connexion IP vers un abonné raccordé au réseau, par l'intermédiaire d'une connexion par canal utile,
**caractérisé en ce que** le point de commutation est conçu de telle manière qu'il accepte un service, p. ex. un appel, arrivant du noeud d'accès au réseau pour l'abonné pendant l'existence de la connexion par canal utile, par l'intermédiaire du réseau sur le noeud d'accès au réseau de l'abonné, qu'il le propose à l'abonné par l'intermédiaire de la connexion par canal utile et qu'il le transmet le cas échéant.
